# EUROPÄISCHE PATENTSCHRIFT

(11) **EP 2 222 422 B1**
(45) Veröffentlichungstag und Bekanntmachung des Hinweises auf die Patenterteilung: **25.05.2011**
(21) Anmeldenummer: 08857513.9
(22) Anmeldetag: 03.12.2008
(51) Int. Cl.: B21B 15/00, B23K 37/04

(54) **VORRICHTUNG UND VERFAHREN ZUM VERBINDEN VON BÄNDERN**
DEVICE AND METHOD FOR CONNECTING RIBBONS
DISPOSITIF ET PROCÉDÉ PERMETTANT DE JOINDRE DES BANDES

(30) Priorität: 05.12.2007 DE 102007058840; 06.05.2008 DE 102008022269
(43) Veröffentlichungstag der Anmeldung: 01.09.2010
(73) Patentinhaber: SMS Siemag AG, 40237 Düsseldorf (DE)
(72) Erfinder: BEHRENS, Holger, 40699 Erkrath (DE); BERG, Robert, 40764 Langenfeld (DE); KÜMMEL, Lutz, 41363 Jüchen (DE); BENDLER, Manuel, 40545 Düsseldorf (DE); SOHL, Ralf-Hartmut, 42699 Solingen (DE); DE KOCK, Peter, 46117 Oberhausen (DE); TOMZIG, Michael, 65796 Hattersheim (DE)
(74) Vertreter: Klüppel, Walter
(86) Internationale Anmeldenummer: PCT/EP2008/010213
(87) Internationale Veröffentlichungsnummer: WO 2009/071268

(56) Entgegenhaltungen:
- DE-A1- 1 627 555
- DE-C1- 3 809 713

## Beschreibung

### Technisches Gebiet

Die Erfindung betrifft eine Vorrichtung und ein Verfahren zum Verbinden von Bändern insbesondere zu einem Endlosband.

### Stand der Technik

Bei der Bearbeitung von Metallbändern ist es zweckmäßig, wenn diese Bearbeitung kontinuierlich erfolgt, da dadurch keine Wechselzeiten zum Wechsel der zu bearbeitenden Werkstücke im Prozess aufgewendet werden müssen. Wenn-die Werkstücke aber als Bänder endlicher Länge vorliegen, ist es vorteilhaft, diese vorteilhaft zu verbinden, wobei durch mehrfache Wiederholung einer derartigen Verbindung so ein so genanntes "Endlosband" erzeugt werden kann, das dann in einer kontinuierlichen Bearbeitungsstraße (Conti-Straße) bearbeitet werden kann. Nach der Bearbeitung als Endlosband wird das Endlosband typischer Weise wieder in einzelne Bänder geteilt.

Solche Vorrichtungen sind beispielsweise durch die WO 2007/124872 A1 bekannt geworden. Dabei sind die oberen und unteren Messer durch Gelenkverbindungen schwenkbar geführt.

Die DE 38 09 713 C1 beschreibt eine Bandschweißanlage und ein Verfahren zur Schweißspalteinstellung von Bandenden. Bei dieser Bandschweißanlage sind Mittel zum Spannen der Bandenden, eine Schere zum Beschneiden der Bandenden und Vorschubeinheiten zum Verschieben der Bandenden in geklemmter Anordnung relativ zur Förderrichtung der Bänder vorgesehen.

Die DE 1 627 555 beschreibt eine Vorrichtung zum Zusammenschweißen von Bandenden, welche durch zwei im Abstand voneinander an einem Halter angeordnete und je einer Schnittkante zugeordnete Schermesser in einem Zug besäumt werden. Durch einen Querbalken werden die zu verschweißenden Bandenden festgeklemmt.

### Darstellung der Erfindung, Aufgabe, Lösung, Vorteile

Aufgabe der Erfindung ist es daher, eine Vorrichtung und ein Verfahren zum Verbinden von Bändern zu schaffen, mit der die Wechselzeiten zum Anpassen und Positionieren der Vorrichtung an unterschiedliche Abmessungen reduziert werden und mittels welcher bzw. welchem ein Endlosband aus Blechbändern einfach, schnell und mit hoher Güte erzeugt werden kann.

Dies wird hinsichtlich der Vorrichtung erfindungsgemäß erreicht durch eine Vorrichtung zum Verbinden von Bändern zu einem Endlosband mit einer Klemmeinrichtung mit einer einlaufseitigen Klemmvorrichtung und einer auslaufseitigen Klemmvorrichtung, einer Schneideeinrichtung mit einem Obermesser und einem Untermesser und einer Fügeeinrichtung, wobei zumindest die einlaufseitige Klemmvorrichtung und/oder die auslaufseitige Klemmvorrichtung als vormontierbare Einheit ausgebildet ist. Dies bewirkt, dass die zur Betätigung der Klemmvorrichtung gehörigen Elemente gemeinsam vormontierbar sind und miteinander in den Rahmen der Vorrichtung verbaubar sind. Dies hat den Vorteil, dass ein Austausch relativ schnell durchgeführt werden kann und der Produktionsprozess dadurch nicht sehr lange unterbrochen werden muss. Weiterhin erlaubt die vormontierbare Einheit eine genaue Positionierung der Einheit, so dass ihre Justierung bereits vor der Montage durchgeführt werden kann. Vorteilhafterweise sind die Bänder zum Fügen mittels der einlaufseitigen und der auslaufseitigen Klemmvorrichtung über die Untermesser in eine Schweißposition hebbar. Dies ist insbesondere dann vorteilhaft, wenn die Untermesser feststehen, da dadurch der Fügevorgang durchgeführt werden kann ohne dass die Messer der Schneidvorrichtung beeinträchtigt werden.

Vorteilhaft ist insbesondere, wenn die Schneideeinrichtung mit Untermesser und Obermesser ausgestattet ist, wobei das Untermesser in einem Rahmen der Vorrichtung fixiert ist und das Obermesser gesteuert zumindest vertikal verlagerbar ist. Dadurch wird erreicht, dass die Position des Untermessers fixiert ist und nicht durch einen Schwenkmechanismus toleranzbehaftet ist.

Weiterhin ist es vorteilhaft, wenn die Schneideeinrichtung Ober- und Untermesser umfasst, wobei die Obermesser von oben zum Schnitt in Richtung auf die feststehenden Untermesser fahrbar sind.

Auch ist es zweckmäßig, wenn nach dem Schnitt die geschnittenen Bandenden durch laterale Verschiebung der entsprechenden Klemmeinrichtung aufeinander zu bewegbar sind.

Besonders vorteilhaft ist es, wenn nach der lateralen Verschiebung des Bandes ein weiterer zweiter Schnitt durchführbar ist, so dass dadurch auch ein genauerer Schnitt durchführbar ist.

Weiterhin ist es zweckmäßig, wenn zur Stützung der Bandenden zumindest ein Schweißtisch unter das Band verfahrbar ist.

Auch ist es zweckmäßig, wenn die Vorrichtung im Wesentlichen symmetrisch ausgebildet ist und zwei Klemmeinrichtungen, zwei Schneideeinrichtungen und zumindest eine Fügeeinrichtung aufweist.

Hinsichtlich des Verfahrens wird dies erreicht durch ein Verfahren zum Betrieb einer Vorrichtung zum Verbinden von Bändern zu einem Endlosband mit einer Klemmeinrichtung mit einer einlaufseitigen Klemmvorrichtung und einer auslaufseitigen Klemmvorrichtung, einer Schneideeinrichtung mit einem Obermesser und einem Untermesser und einer Fügeeinrichtung, dadurch gekennzeichnet, dass in einem ersten Schritt die Klemmvorrichtungen geöffnet werden und zwei Bandenden eingeführt werden und in einem folgenden Schritt die Bandenden in den Klemmvorrichtungen eingeklemmt werden, in einem nächsten Schritt die Bandenden mittels der Schneideinrichtung geschnitten werden und danach die geschnittenen Enden erneut positioniert werden, bevor sie erneut geschnitten werden und danach erneut positioniert werden und gefügt werden.

Dabei ist es vorteilhaft, wenn eine Unterstützung zumindest eines Bandendes durch einen Schweißtisch vorgesehen wird.

Auch ist es zweckmäßig, wenn eine Höhenanpassung zumindest eines Bandendes erfolgt, insbesondere zum Ausgleich von Dickenunterschieden der Bandenden.

Vorteilhafte Weiterbildungen sind in den Unteransprüchen beschrieben.

### Kurze Beschreibung der Zeichnungen

Nachstehend wird die Erfindung auf der Grundlage eines Ausführungsbeispiels anhand der Zeichnungen näher erläutert. Es zeigen:
- Fig. 1: eine schematische Darstellung einer erfindungsgemäßen Vorrich- tung zum Fügen von Bändern;
- Fig. 2: eine schematische Darstellung einer erfindungsgemäßen Vorrich- tung zum Fügen von Bändern;
- Fig. 3: eine schematische Darstellung einer erfindungsgemäßen Vorrich- tung zum Fügen von Bändern;
- Fig. 4: eine schematische Darstellung einer erfindungsgemäßen Vorrich- tung zum Fügen von Bändern;
- Fig. 5: eine schematische Darstellung einer erfindungsgemäßen Vorrich- tung zum Fügen von Bändern;
- Fig. 6: eine schematische Darstellung einer erfindungsgemäßen Vorrich- tung zum Fügen von Bändern;

- Fig. 7: eine schematische Darstellung einer erfindungsgemäßen Vorrich- tung zum Fügen von Bändern; und
- Fig. 8: eine schematische Darstellung einer erfindungsgemäßen Vorrich- tung zum Fügen von Bändern.

### Bevorzugte Ausführung der Erfindung

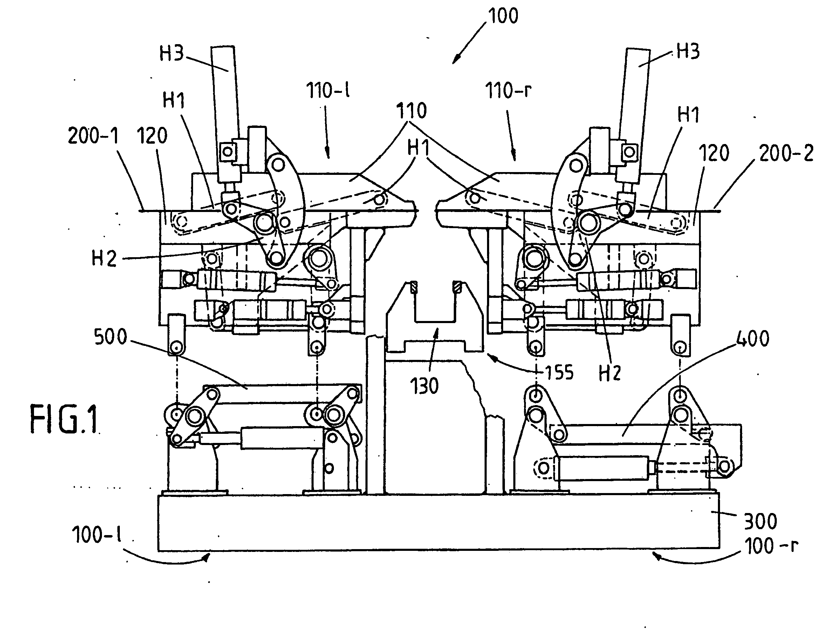

Die erfindungsgemäße Vorrichtung zum Verbinden der Einzelnbänder wird nachfolgend anhand der Figuren 1 bis 8 beschrieben. Dabei sind jeweils gleiche Bauelemente mit gleichen Bezugszeichen bezeichnet. Typischer Weise ist die in den jeweiligen Figuren gezeigte Vorrichtung zumindest teilweise symmetrisch aufgebaut. Daher sind Elemente der Vorrichtung auf der rechten Seite mit -r und auf der linken Seite mit -I bezeichnet.

Die Fig. 1 zeigt die erfindungsgemäße Vorrichtung zum Verbinden von Bändern 100, welche einen rechten Teil 100-r und einen linken Teil 100-I der Vorrichtung 100 aufweist. Die beiden Teile der Vorrichtung sind im Wesentlichen spiegelsymmetrisch ausgebildet und sind grundsätzlich jeweils für die Handhabung eines der miteinander zu verbindenden Einzelbänder zuständig. So wird ein erstes Einzelband 200-1 von links in den linken Teil 100-I und ein zweites Einzelband 200-2 von rechts in den rechten Teil 100-r der Vorrichtung 100 eingeführt oder diesen zugeführt.

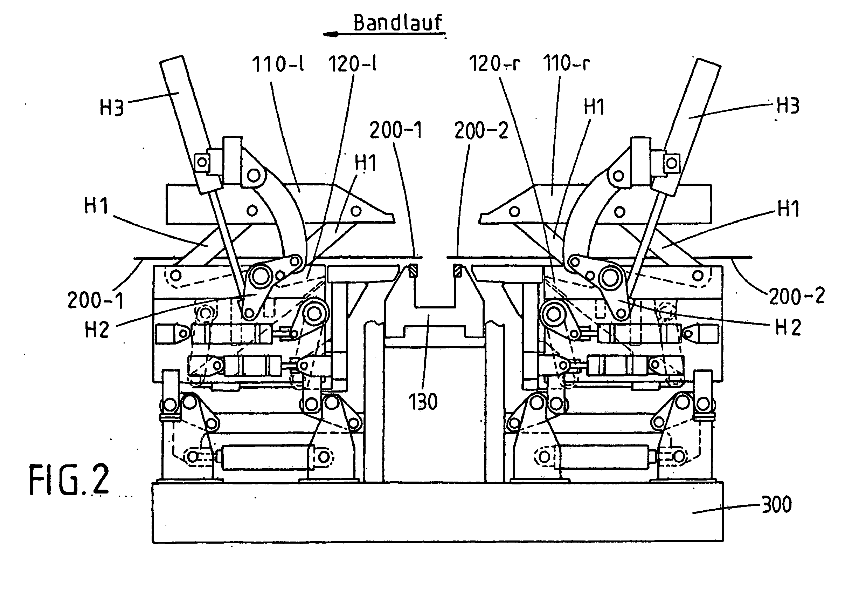

Zum Einführen der jeweiligen Bänder 200-1, 200-2 kann jeweils die obere Bandklemme 110-I, 110-r über parallelogrammartig angeordnete Hebel H1 nach oben in eine geöffnete Position geschwenkt werden. Dazu sind die Hebel H1 jeweils über Gelenke an der unteren und an der oberen Bandklemme 110,120 angeordnet, so dass bei einem Verschwenken der Hebel die obere Bandklemme relativ zur unteren Bandklemme verschwenkt. Dabei weist die Vorrichtung 100 sowohl im rechten Teil 100-r als auch im linken Teil 100-I Klemmvorrichtungen 110,120 auf, die zum Greifen und Halten des Bandes bzw. des Einzelbandes 200-1, 200-2 geöffnet und geschlossen werden können. Die Klemmvorrichtungen 110,120 bestehen dabei jeweils aus zwei sich relativ zueinander ver lagerbaren bzw. verschwenkbaren Bandklemmen 110-r,110-I und 120-r und 120-I. Dabei ist die jeweils obere Bandklemme 110-r bzw. 110-I in Zusammenwirken mit der unteren Bandklemme 120-r bzw. 120-I. Die obere Bandklemme 120 kann durch die Führung der parallelogrammartigen Hebel H1 derart verschwenkt werden, dass zwischen der oberen Bandklemme 110 und der unteren Bandklemme 120 ein Spalt oder Aufnahmebereich zur Aufnahme des Bandes 200-1,200-2 entsteht, der durch das Zurückschwenken wieder geschlossen wird und das Band von den Bandklemmen 110,120 eingeklemmt und gehalten wird. Dabei bilden zumindest die oberen und die unteren Bandklemmen 110,120 eine Klemmeinrichtung zum Einklemmen eines Bandes. Die Bandklemmen 110,120 sind mittels der Hebel H1 verschwenkbar ausgebildet, wobei jeweils zwei Hebel an der oberen und der unteren Bandklemme angreifen und wobei ein Hydraulikzylinder H3 über einen Hebel H2 das Auseinanderfahren bzw. Zusammenfahren der Bandklemmen 110,120 steuert, siehe auch Figur 2. Dabei wird der Hydraulikzylinder H3 mittel einer nicht näher erläuterten Steuereinrichtung gezielt angesteuert. Statt des Hydraulikzylinders kann grundsätzlich auch ein anderer druckmittelbetätigter Zylinder oder auch ein Elektromechanischer Stellmotor verwendet werden.

Die Klemmvorrichtung 110,120 ist mit den Hebeln H1, H2 und Stellelementen H3, wie Hydraulikzylindern, vorteilhaft als vormontierte Einheit aufgebaut, die gemeinsam montiert und im Falle einer Reparatur oder Wartung auch wieder demontiert werden kann.

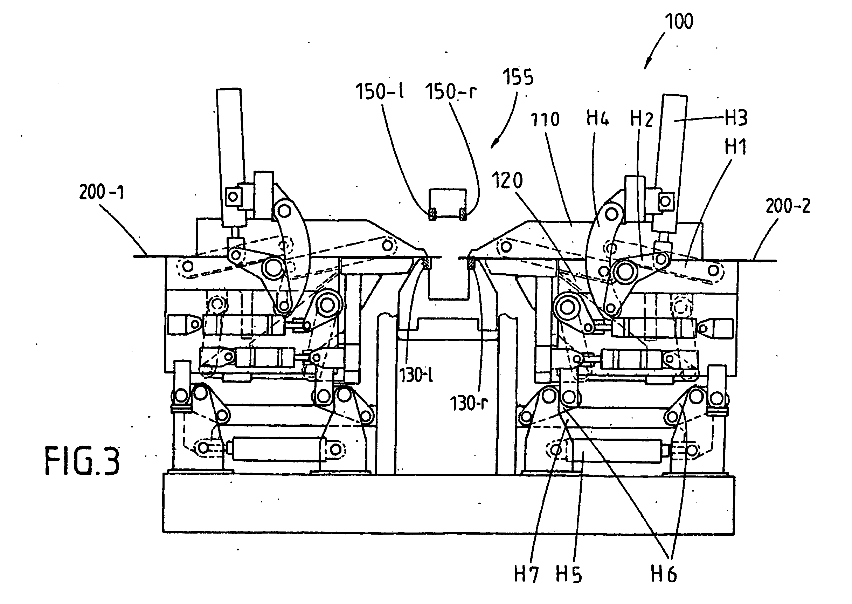

Darüber hinaus erkennt man in der Figur 1 neben der rechten und der linken Klemmvorrichtung 110-r, 120-r, 110-I, 120-I eine Untermesserkassette 130 einer Schneidvorrichtung 155, die mit einem Rahmen 300 der Vorrichtung 100 fest verbindbar ist. Dabei ist die Untermesserkassette 130 vorteilhaft fest und unbeweglich, aber trotzdem lösbar mit dem Rahmen 300 verbindbar, so dass sie im Bedarfsfalle mit dem Untermesser für Wartungs- und/oder Reparaturzwecke oder zum Zweck eines Messerwechsels ausbaubar und austauschbar ist. Dabei kann nach Lösen zumindest einer Verbindung zwischen Untermesserkassette 130 und dem Rahmen 300 die Kassette 130 aus dem Rahmen 300 herausgezogen werden. Die Schneidvorrichtung 155 ist dabei derart aufgebaut, dass das obere Messer bzw. die Obermesserkassette 150, siehe Figur 3, zum Schneiden auf das untere Messer bzw. zur Untermesserkassette hin bewegt oder verfahren oder beaufschlagt wird.

Weiterhin ist in Figur 1 zu erkennen, dass die Klemmvorrichtungen 110,120 mittels der Hub- und Positioniereinrichtungen 400 in ihrer Höhe aus auch in ihrer lateralen Position einstellbar sind. Durch die die Positioniereinrichtung 400 bildenden Hydraulikzylinder, Hebel und Synchronisationsstangen kann die Klemmvorrichtung jeweils positioniert werden.

Darüber hinaus erkennt man in Figur 1 eine so genannte Einfahreinrichtung 500, welche dazu dient, die Klemmvorrichtung 110,120 in lateraler Richtung zu verfahren. Durch die die Einfahreinrichtung 500 bildenden Hydraulikzylinder, Hebel und Synchronisationsstangen kann die jeweilige Klemmvorrichtung bzw. zumindest eine oder auch beide davon jeweils in lateraler Richtung positioniert werden. Dadurch kann zumindest von einer Seite her die Klemmvorrichtung nach dem Schnitt verlagert werden, um das geschnittene Band an der Schnittstelle bzw. zumindest geringfügig daneben erneut zu schneiden.

Die Figur 2 zeigt, wie ein Band 200-1,200-2 in jeweils eine geöffnete Klemmeinrichtung 110,120 eingefahren wird. Dabei bilden die obere Bandklemme 110 einen Klemmbalken und die untere Bandklemme 120 einen Klemmtisch, zwischen welchen das Band eingeklemmt werden kann. Zum Schneiden der beiden Bänder werden die beiden Einzelbänder 200-1 und 200-2 nach dem Öffnen der Bandklemmen 110,120 zunächst von rechts kommend und von links kommend in Richtung der der Mitte der Vorrichtung 100 zusammen geschoben, so dass sie sich jedoch im Bereich zwischen den Bandklemmen nicht zwingend berühren bzw. "auf Stoß" liegen. Wesentlich ist jedoch, dass das jeweilige Band 200-1,200-2 soweit eingeschoben ist, dass das jeweils vordere Ende des Bandes über dem jeweiligen Messer der unteren Messerkassette 130 liegt. Die oberen Bandklemmen 110-r und 110-I werden dann zum Klemmen wieder in eine untere Schließposition abgesenkt, in welcher die beiden Einzelbänder 100-1 und 200-2 dann zwischen der oberen Bandklemme 110-r, 110-I und einer unteren Bandklemme 120-r und 120-1 fest eingespannt sind.

Die oberen Bandklemmen 110-r und 110-I werden über die Hebelarme H1 in ihrer Schwenkbewegung geführt und die Antriebskraft für den Schwenkvorgang wird beispielsweise durch Hydraulikzylinder H3 aufgebracht. Das Öffnen und das Schließen der oberen Bandklemmen 110 wird dabei über Hydraulikzylinder H3-I und H3-r im Zusammenwirken mit den Laschen H2 und den Hebeln H1 bewerkstelligt.

Die Figur 3 zeigt, dass die Bänder 200-1,200-2 dann im mittigen Bereich gleichzeitig auf den Untermessern 130-I, 130-r aufliegen. Im mittigen Bereich zwischen der linken und der rechten oberen Bandklemme 110-I, 110-r senken sich dann Obermesser 150-t, 150-r auf die beiden Bänder ab und schneiden im Zusammenwirken mit den Untermessern 130-I, 130-r deren jeweilige Enden ab. Nach dem Schneiden weisen die beiden neuen Enden der Bänder 200-1, 200-2 jeweils eine saubere und gerade Schnittkante auf, wobei die beiden Schnittkanten dann im Wesentlichen parallel zueinander ausgerichtet sind. Dabei bilden zumindest die oberen und die unteren Messer 130,150 eine Schneideeinrichtung 155 zum Schneiden eines Bandes.

Die Figur 3 zeigt weiterhin, dass die Vorrichtung 100 in dem Betriebszustand des Klemens und Schneidens. Mittels der Zylinder H3 werden die Bänder 200-1,200-2 über die Hebel H2 und den oberen Verbindungsstücken H4 zwischen dem unteren Klemmtisch 120 und dem oberen Klemmbalken 110 gespannt. Weiterhin wird das jeweilige Bandende in der Klemmvorrichtung mit den Bandklemmen 110,120 gegen die unteren Messer 130 gespannt. Dazu werden die in die Klemmvorrichtung eingespannten Bandenden der Bänder 200-1,200-2 mittels der Zylinder H5 über die Hebel H6 und die Synchronisationsstangen H7 gegen die unteren Messer der unteren Messerkassette beaufschlagt. Anschlieβend können die Bandenden der Bänder 200-1,200-2 geschnitten werden.

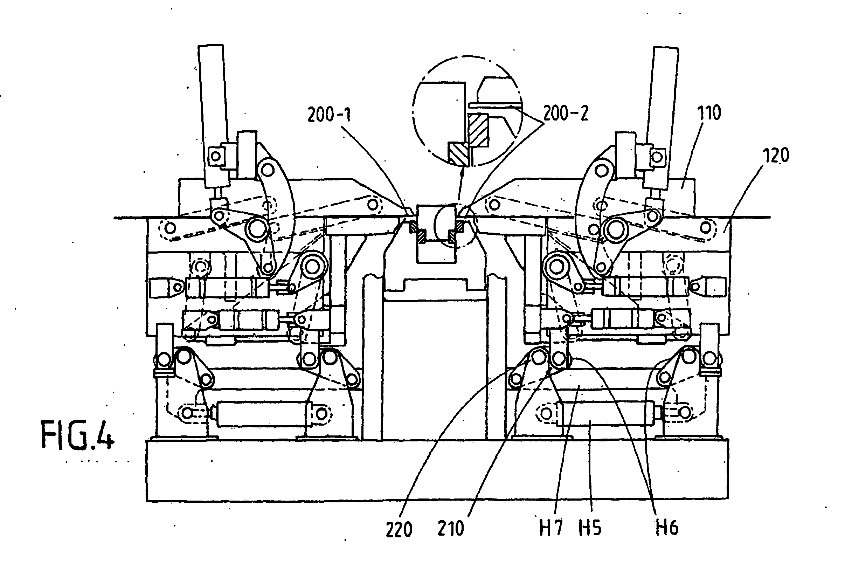

Die Figur 4 zeigt, dass beim Schneiden die Drehpunkte 210 unter den Drehpunkten 220 liegen. Durch ein vorteilhaft positionsgesteuertes Ausfahren des Zylinders H5 können die Drehpunkte 210 und 220 auf die gleiche horizontale Höhe gebracht werden. Dadurch werden die Klemmvorrichtungen 110,120 jeweils zumindest geringfügig angehoben und auseinander gefahren, so dass die Bandenden der Bänder mit dem jeweils geschnittenen Bandanfang sich von dem Messer entfernen. Dadurch wird es erlaubt, dass die Obermesser verfahren werden können, wie beispielsweise eingefahren werden, ohne dass sie die geschnittenen Bandenden berühren, weil diese von dem Obermesser zumindest geringfügig entfernt wurden.

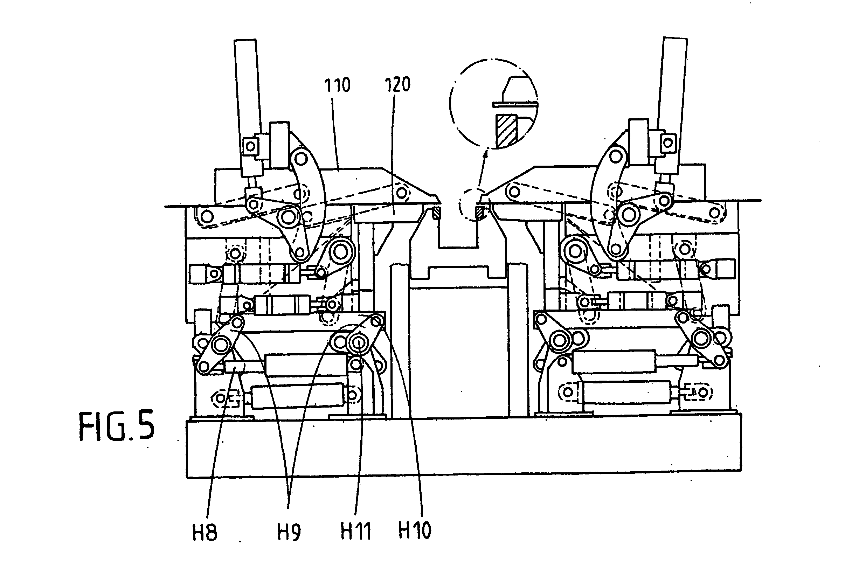

Nachdem das Obermesser nach oben entfernt wurde, kann ein zweiter Schnitt erfolgen. Für die Schnittwiederholung erkennt man in Figur 5, dass die Klemmvorrichtung 110,120 mittels der Zylinder H8, der Hebel H9, der Synchronisationsstangen H10 und der Exzenter H11 in Richtung auf die Messer nach innen eingefahren werden können. Dazu wird der Zylinder H8 derart angesteuert, dass seine Schubstange sich nach links bewegt, so dass der Hebel H9 sich im Uhrzeigersinn verdreht und damit die Synchronisationsstange H10 sich nach rechts bewegt und die Klemmen der Klemmvorrichtung 110,120 nach innen verlagert.

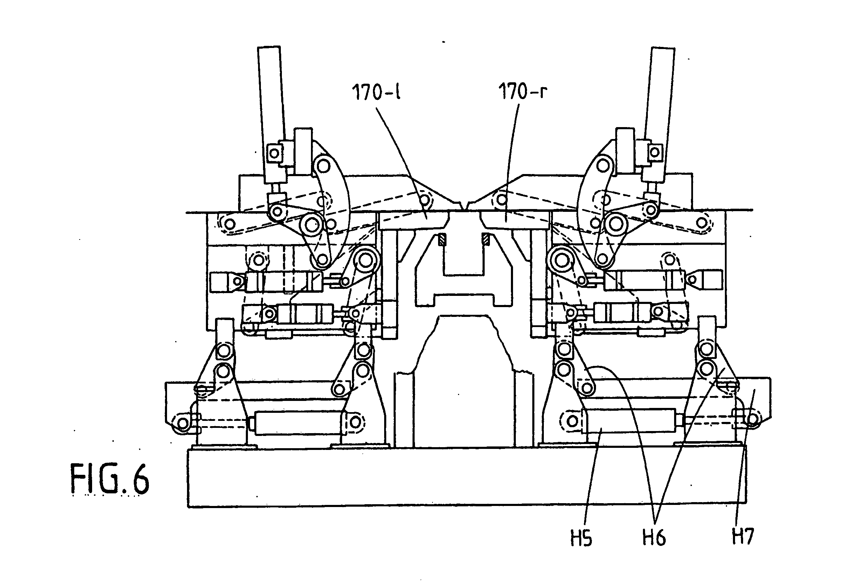

Die Figur 6 zeigt, wie die Bandenden nach dem Schnitt der Bandenden in die für die Schweißung notwendige Position geschwenkt wird. Dazu werden durch ein positionsgesteuertes Ausfahren der Hydraulikzylinder H5 die Klemmvorrichtungen 110,120 mittels der Schwingen H6 und der Synchronisationsstangen H7 in die Schweißposition gefahren, so dass sich die beiden Bandenden zumindest nahezu berühren. Zwischen den beiden Bandenden, also Bandende und Bandanfang, befindet sich noch ein geringer Spalt. Die Schweißtische 170-I, 170-r sind in Figur 6 noch nicht in Schweißposition. Vorteilhaft ist es auch, wenn die Schweißtische 170 ein- oder mehrteilig ausgebildet sind. Auch können sie mittels Betätigungselementen, wie beispielsweise mittels Hydraulikzylindern und/oder Hebeln verfahrbar oder verschwenkbar ausgestaltet sein.

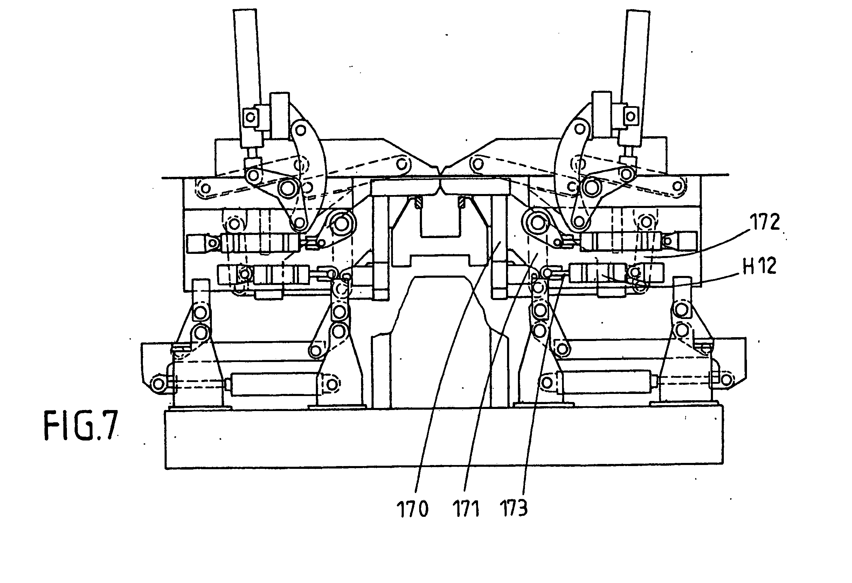

Zum Abstützen der Bandenden der Bänder 200-1, 200-2 an der zu schweißenden Fügestelle wird dann gemäß Figur 7 ein linker und ein rechter Schweißtisch 170-1, 170-r seitlich von unten gegen die Bandenden gefahren.

Dabei werden die Schweißtische 170 mittels der Schwingen 171,172 und des Zylinders H12 in die Schweißposition verschoben. Der Schweißtisch ist mittels der Schwingen 171,172 parallelogrammartig aufgehängt und kann durch den einseitig an einem Festlager angeordneten Zylinder H12 mittels der Schubstange 173 des Zylinders H12 verschwenkt und somit lateral verlagert werden.

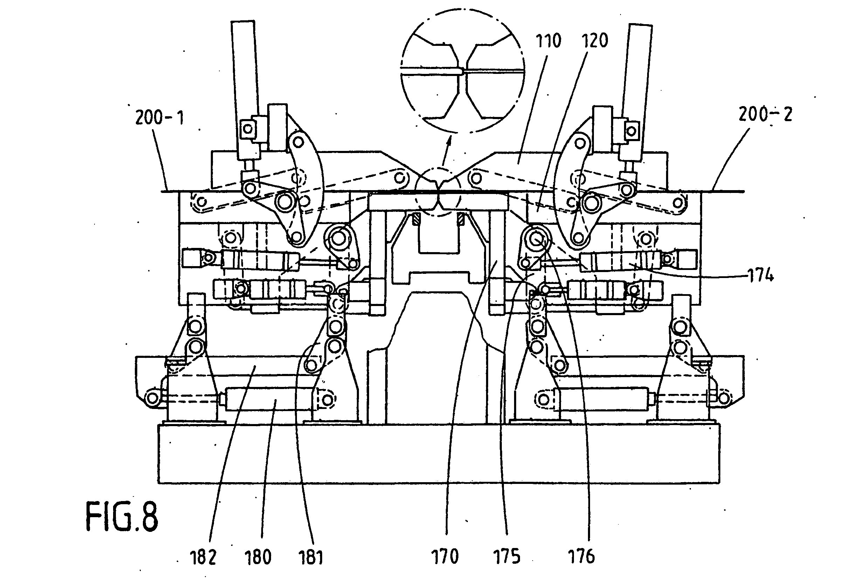

Die Figur 8 zeigt, dass die Schweißtische 170 nun zur Mitte verschoben sind. Dabei spannen die Schweißtische 170 das Band 200-1,200-2 im Bereich der Schweißtische 170 gegen den oberen Klemmbalken 110 der Klemmvorrichtung 110,120. Dabei wird der Hydraulikzylinder 174 betätigt und über die Schwinge 175 und den Exzenter 176 wird der Schweißtisch 170 nach oben beaufschlagt.

Dadurch kann auch bei unterschiedlichen Banddicken auf der linken und auf der rechten Seite das Band mittig oder symmetrisch zueinander eingestellt werden. Dabei kann eine große Genauigkeit bei gleich dicken Bändern erreicht werden, wenn die Zylinder 174 an die Endlagen oder gegen Anschläge fahren.

Dadurch wird vor dem Verschweißen der Bandenden, insbesondere bei unterschiedlich dicken Bändern ein Höhenausgleich erzeugt, so dass die beiden Bandenden in der Höhe zentrisch zueinander positioniert und fixiert werden können; anders ausgedrückt werden die Bänder auf neutraler Achse gefügt. Die so eingestellte Position der Bandenden zueinander repräsentiert die eigentliche Schweißposition.

Weiterhin ist in Figur 8 zu erkennen, dass mittels des Zylinders 180 und über die Hebel 181 und die Synchronisationsstangen 182 der Schweißspalt einstellbar ist. Dabei wird der Spalt zwischen den Klemmbalken 110 eingestellt. Dabei kann der Zylinder 180 positionsgesteuert angefahren werden, wodurch ein vorgebbarer Spalt erzeugt wird oder es wird kraftgesteuert gegen einen Anschlag gefahren, wodurch die Bänder auch unter Druck im Schweißspalt zusammengefahren werden.

In der Schweißposition werden die Bandenden dann mittels einer Fügeeinrichtung gefügt, die beispielsweise von oben über der Schweißposition absenkbar ist und die Bandenden miteinander verschweißt.

### Bezugszeichenliste

- 100: Vorrichtung
- 100-r, 100-I: rechter bzw. linker Teil der Vorrichtung
- 110: obere Bandklemme
- 110-I, 110-r: obere Bandklemme links bzw. rechts, Klemmbalken
- 120: untere Bandklemme
- 120-I, 120-r: untere Bandklemme links bzw. rechts, Klemmtisch
- 125: Klemmeinrichtung
- 130: Untermesser, Untermesserkassette
- 130-I, 130-r: Untermesser
- 150: Obermesser, Obermesserkassette
- 150-I, 150-r: Obermesser
- 155: Schneidevorrichtung
- 160: Hydraulikzylinder
- 160-I, 160-r: Hydraulikzylinder
- 170: Schweißtisch.
- 170-I, 170-r: Schweißtisch
- 171: Schwinge
- 172: Schwinge
- 173: Schubstange
- 174: Hydraulikzylinder
- 175: Schwinge
- 176: Exzenter
- 180: Zylinder
- 181: Hebel
- 182: Synchronisationsstange
- 200: Band
- 200-1: Einzelband
- 200-1.1: Einzelband
- 210: Drehpunkt
- 220: Drehpunkt
- 300: Rahmen
- 400: Positioniereinrichtung
- 500: Einfahreinrichtung
- H1: Hebel
- H2: Lasche, Hebel
- H3: Hydraulikzylinder, Zylinder
- H4: Verbindungsstück
- H5: Zylinder
- H6: Hebel, Schwinge
- H7: Synchronisationsstange
- H8: Zylinder
- H9: Hebel
- H10: Synchronisationsstange
- H11: Exzenter
- H 12: Zylinder

## Patentansprüche

1. Vorrichtung (100) zum Verbinden von Bändern zu einem Endlosband mit einer Klemmeinrichtung (110,120) mit einer einlaufseitigen Klemmvorrichtung (110-r,120-r) und einer auslaufseitigen Klemmvorrichtung (110-l,12O-l), einer Schneideeinrichtung (155) mit einem Obermesser (150) und einem Untermesser (130) und einer Fügeeinrichtung, **dadurch gekennzeichnet, dass** zumindest die einlaufseitige Klemmvorrichtung (110-r,120-r) und/oder die auslaufseitige Klemmvorrichtung (110-1,120-1) als vormontierbare Einheit ausgebildet ist.

2. Vorrichtung nach Anspruch 1, **dadurch gekennzeichnet, dass** die Bäder (200-1,200-2) zum Fügen mittels der einlaufseitigen und der auslaufseitigen Klemmvorrichtung (110-r, 120-r, 110-l, 120-l) über die Untermesser (130) in eine Schweißposition hebbar sind.

3. Vorrichtung nach Anspruch 1 oder Anspruch 2, **dadurch gekennzeichnet, dass** die Schneideeinrichtung mit Untermesser und Obermesser ausgestattet ist, wobei das Untermesser in einer Untermesserkassette in einem Rahmen (300) der Vorrichtung (100) fixiert ist, und das Obermesser (150) gesteuert zumindest vertikal verlagerbar ist.

4. Vorrichtung nach Anspruch 3, **dadurch gekennzeichnet, dass** die Schneide- einrichtung (155) Ober- und Untermesser (1 50,130) umfasst, wobei die Obermesser (150) von oben zum Schnitt in Richtung auf die feststehenden Untermesser (130) fahrbar sind.

5. Vorrichtung nach einem der vorhergehenden Ansprüche, **dadurch gekennzeichnet, dass** nach dem Schnitt die geschnittenen Bandenden durch laterale Verschiebung der entsprechenden Klemmeinrichtung (110,120) aufeinander zu bewegbar sind.

6. Vorrichtung nach einem der vorhergehenden Ansprüche, **dadurch gekennzeichnet, dass** nach der lateralen Verschiebung des Bandes ein weiterer Schnitt durchführbar ist.

7. Vorrichtung nach einem der vorhergehenden Ansprüche, **dadurch gekennzeichnet, dass** zu Stützung der Bandenden zumindest ein Schweißtisch (170) unter das Band verfahrbar ist.

8. Vorrichtung nach einem der vorhergehenden Ansprüche, **dadurch gekennzeichnet, dass** die Vorrichtung (100) im Wesentlichen symmetrisch ausgebildet ist und zwei Klemmeinrichtungen (110,120), zwei Schneideeinrichtungen (130-r, 130-l, 150-r, 150-l) und zumindest eine oder zwei Fügeeinrichtungen aufweist.

9. Verfahren zum Betrieb einer Vorrichtung (100) nach einem der vorhergehenden Ansprüche 1 bis 8, zum Verbinden von Bändern zu einem Endlosband mit einer Klemmeinrichtung (110,120) mit einer einlaufseitigen Klemmvorrichtung (110-r, 120-r) und einer auslaufseitigen Klemmvorrichtung (110-1,120-1), einer Schneideeinrichtung (155) mit einem Obermesser (150) und einem Untermesser (130) und einer Fügeeinrichtung, **dadurch gekennzeichnet, dass** in einem ersten Schritt die Klemmvorrichtungen geöffnet werden und zwei Bandenden eingeführt werden und in einem folgenden Schritt die Bandenden in den Klemmvorrichtungen eingeklemmt werden, in einem nächsten Schritt die Bandenden mittels der Schneideinrichtung geschnitten werden, bevor sie in eine Fügeposition gefahren und dort gefügt werden.

10. Verfahren nach Anspruch 9, **dadurch gekennzeichnet, dass** ein Unterstützung zumindest eines Bandendes durch einen Schweißtisch vorgesehen wird.

11. Verfahren nach Anspruch 9 oder 10, **dadurch gekennzeichnet, dass** eine Höhenanpassung zumindest eines Bandendes erfolgt, insbesondere zum Ausgleich von Dickenunterschieden der Bandenden.

12. Verfahren nach einem der Ansprüche 9, 10 oder 11, **dadurch gekennzeichnet, dass** nach dem ersten Schnitt die Einfahreinrichtung (500) mit den noch eingeklemmten Bandenden erneut positioniert wird und die Bandkanten ein zweites Mal zugeschnitten werden, bevor sie in die Fügeposition verfahren werden, um dort gefügt zu werden.

## Claims

1. Device (100) for connecting strips to form an endless strip, comprising clamping equipment (110, 120) with a clamping device (110-r, 120-r) at the inlet side and a clamping device (110-l, 120-l) at the outlet side, cutting equipment (155) with an upper knife (150) and a lower knife (130) and a joining device, **characterised in that** at least the clamping device (110-r, 120-r) at the inlet side and/or the clamping device (110-l, 120-l) at the outlet side is or each constructed as a preassemblable unit.

2. Device according to claim 1, **characterised in that** the strips (200-1, 200-2) are, for joining, raisable by means of the clamping devices (110-r, 120-r, 110-l, 120-l) at the inlet side and outlet side above the lower knife (130) into a welding position.

3. Device according to claim 1 or claim 2, **characterised in that** the cutting equipment is equipped with a lower knife and an upper knife, wherein the lower knife is fixed in a lower knife cassette in a frame (300) of the device (100) and the upper knife (150) is controlled to be at least vertically displaceable.

4. Device according to claim 3, **characterised in that** the cutting equipment (155) comprises upper and lower knives (150, 130), wherein the upper knife (150) is, for cutting, movable from above in direction towards the stationary lower knife (130).

5. Device according to any one of the preceding claims, **characterised in that**, after cutting, the cut strip ends are movable towards one another by lateral displacement of the corresponding clamping equipment (110, 120).

6. Device according to any one of the preceding claims, **characterised in that** after the lateral displacement of the strip a further cut can be performed.

7. Device according to any one of the preceding claims, **characterised in that** for supporting the strip ends at least one welding table (170) is movable below the strip.

8. Device according to any one of the preceding claims, **characterised in that** the device (100) is of substantially symmetrical construction and comprises two items of clamping equipment (110, 120), two items of cutting equipment (130-r, 130-l, 150-r, 150-l) and at least one or two items of joining equipment.

9. Method of operating a device (100) according to any one of the preceding claims 1 to 8, for connecting strips to form an endless strip, comprising clamping equipment (110, 120) with a clamping device (110-r, 120-r) at the inlet side and a clamping device (110-l, 120-l) at the outlet side, cutting equipment (155) with an upper knife (150) and a lower knife (130) and joining equipment, **characterised in that** in a first step the clamping devices are opened and two strip ends are introduced, in a following step the strip ends are clamped in the clamping devices, and in a next step the strip ends are cut by means of the cutting equipment before they are moved into a joining position and joined there.

10. Method according to claim 9, **characterised in that** a support of at least one strip end is provided by a welding table.

11. Method according to claim 9 or 10, **characterised in that** a height adaptation of at least one strip end is carried out, particularly to provide compensation for differences in thickness of the strip ends.

12. Method according to any one of claims 9, 10 and 11, **characterised in that** after the first step the introducing equipment (500) with the strip ends still clamped in place is repositioned and the strip ends are cut a second time before they are moved into the joining position in order to be joined there.

## Revendications

1. Dispositif (100) pour relier des courroies afin d'obtenir une seule courroie sans fin, comprenant un mécanisme de serrage (110, 120) comprenant un Dispositif de serrage (110-r, 120-r) côté entrée et un dispositif de serrage (110-1, 120-1) côté sortie, un mécanisme de coupe (155) comprenant une lame supérieure (150) et une lame inférieure (130), ainsi qu'un mécanisme de jonction, **caractérisé en ce qu'**au moins le dispositif de serrage (110-r, 120-r) côté entrée et/ou le dispositif de serrage (110-1, 120-1) côté sortie est/sont réalisé(s) sous la forme d'une unité qui peut être préassemblée.

2. Dispositif selon la revendication 1, **caractérisé en ce que** les courroies (200-1, 200-2) qui doivent être jointes au moyen du dispositif de serrage côté entrée (110-r, 120-r) et du dispositif de serrage (110-l, 120-l) côté sortie peuvent être soulevées via la lame inférieure (130) jusque dans une position de soudage.

3. Dispositif selon la revendication 1 ou 2, **caractérisé en ce que** le mécanisme de coupe est équipé d'une lame inférieure et d'une lame supérieure, la lame inférieure étant fixée dans une cassette pour lame inférieure dans un bâti (300) du dispositif (100), et la lame supérieure (150) est à même de se déplacer en étant guidée, au moins en direction verticale.

4. Dispositif selon la revendication 3, **caractérisé en ce que** le mécanisme de coupe (155) est équipé d'une lame inférieure et d'une lame supérieure (150, 130), la lame supérieure (150) étant à même de se déplacer à partir du haut pour la coupe dans la direction de la lame inférieure fixe (130).

5. Dispositif selon l'une quelconque des revendications précédentes, **caractérisé en ce que**, après la coupe, les extrémités des courroies coupées peuvent se mouvoir l'une vers l'autre via un déplacement latéral du dispositif de serrage correspondant (110, 120).

6. Dispositif selon l'une quelconque des revendications précédentes, **caractérisé en ce que**, après le déplacement latéral de la courroie, une coupe supplémentaire peut être mise en oeuvre.

7. Dispositif selon l'une quelconque des revendications précédentes, **caractérisé en ce que**, pour supporter les extrémités des courroies, au moins une table de soudage (170) peut se déplacer en dessous de la courroie.

8. Dispositif selon l'une quelconque des revendications précédentes, **caractérisé en ce que** le dispositif (100) est réalisé pour être essentiellement symétrique et présente deux mécanismes de serrage, (110, 120) deux mécanismes de coupe (130-r, 130-l, 150-r, 150-l) et au moins un ou deux mécanismes de jonction.

9. Procédé pour l'entraînement d'un Dispositif (100) selon l'une quelconque des revendications précédentes 1 à 8, pour relier des courroies afin d'obtenir une seule courroie sans fin, comprenant un mécanisme de serrage (110, 120) comprenant un dispositif de serrage (110-r,.120-r) côté entrée et un dispositif de serrage (110-l, 120-l) côté sortie, un mécanisme de coupe (155) comprenant une lame supérieure (150) et une lame inférieure (130), ainsi qu'un mécanisme de jonction, **caractérisé en ce que**, dans une première étape, on ouvre les dispositifs de serrage et on y introduit deux extrémités de courroie et, dans une étape suivante, les extrémités de courroies viennent s'enserrer dans les dispositifs de serrage, les extrémités des courroies étant coupées, dans une étape suivante, au moyen du mécanisme de coupe, avant de les amener dans une position de jonction à laquelle elles sont jointes.

10. Procédé selon la revendication 9, **caractérisé en ce qu'**on prévoit un support d'au moins une extrémité de courroie via une table de soudage.

11. Procédé selon la revendication 9 ou 10, **caractérisé en ce qu'**on prévoit une adaptation de la hauteur d'au moins une extrémité de courroie, en particulier pour la compensation des différences d'épaisseur des extrémités des courroies.

12. Procédé selon l'une quelconque des revendication 9, 10 ou 11, **caractérisé en ce que**, après la première coupe, le mécanisme d'alimentation (500) comprenant les extrémités de courroies à l'état encore enserré est soumis à un nouveau positionnement et les arêtes de courroies sont soumises à une découpe à dimension pour la deuxième fois, avant de les amener dans la position de jonction pour les y joindre.
